## Europäisches Patentamt
## European Patent Office
## Office européen des brevets

(11) Veröffentlichungsnummer: **0 339 186**
**A2**

(12) # EUROPÄISCHE PATENTANMELDUNG

(21) Anmeldenummer: **89101559.6**

(22) Anmeldetag: **30.01.89**

(51) Int. Cl.⁴: **E04D 11/00 , A01G 9/00**

(30) Priorität: **27.04.88 DE 3814142**

(43) Veröffentlichungstag der Anmeldung:
**02.11.89 Patentblatt 89/44**

(84) Benannte Vertragsstaaten:
**AT BE CH DE ES FR GB GR IT LI LU NL SE**

(71) Anmelder: **Firma Carl Freudenberg**
**Höhnerweg 2-4**
**D-6940 Weinheim/Bergstrasse(DE)**

(72) Erfinder: **Heckel, Klaus, Dr.**
**Am Wetzelsberg 6**
**D-6946 Gorxheimertal-Unterflockenbach(DE)**
Erfinder: **Graab, Gerhard, Dr.**
**Nibelungenring 41**
**D-6800 Mannheim 24(DE)**
Erfinder: **Butscher, Alfons**
**Carl Orff Strasse 37**
**D-6943 Birkenau(DE)**

(74) Vertreter: **Weissenfeld-Richters, Helga, Dr.**
**Höhnerweg 2-4**
**D-6940 Weinheim/Bergstrasse(DE)**

(54) **Tragschicht für die Dachbegrünung.**

(57) Eine Tragschicht für die Dachbegrünung, umfassend eine von Wasserabflußlöchern (1) durchdrungene Kunststoffolie (2), die oberseitig durch eine Filtermatte (3) abgedeckt ist und von oben eingreifende, durch Tiefziehen gebildete erste Eintiefungen (4) aufweist, die seitlich versetzt sind in bezug auf von unten eingreifende, zweite Eintiefungen (5). Die ersten Eintiefungen (4) sind vollständig mit einem druckfesten Schüttgut (6) gefüllt und ebenso napfartig gestaltet wie die zweiten Eintiefungen. Die Wasserabflußlöcher (1) sind den ersten Eintiefungen (4) und den zweiten Eintiefungen (5) seitlich versetzt zugeordnet und die Filtermatte (3) ist unverschiebbar an den nach oben weisenden Böden der zweiten Eintiefungen (5) festgelegt.

Fig. 2

## Tragschicht für die Dachbegrünung

Die Erfindung betrifft eine Tragschicht nach dem Oberbegriff nach Anspruch 1.

Eine solche Tragschicht ist aus der DE-OS 30 45 390 bekannt. Sowohl die Drainagewirkung, als auch die Tragfähigkeit und die Wasserspeicherfähigkeit sind wenig befriedigend. Es entstand daher der Wunsch, eine Tragschicht zu entwickeln, die sich bei im wesentlichen unveränderten Herstellkosten durch eine wesentlich verbesserte Wasserspeicherfähigkeit, eine wesentlich verbesserte Tragfähigkeit und eine wesentlich verbesserte Drainagewirkung von der vorstehend beschriebenen Ausführung unterscheidet.

Diese Aufgabe wird erfindungsgemäß mit einer Tragschicht der eingangs genannten Art gelöst, welche die kennzeichnenden Merkmale von Anspruch 1 aufweist. Auf vorteilhafte Ausgestaltungen nehmen die Unteransprüche Bezug.

Bei der erfindungsgemäßen Tragschicht sind die ersten und die zweiten Eintiefungen napfartig gestaltet, d.h. in seitlicher Richtung durch im wesentlichen unnachgiebige Wandungen begrenzt. Sie zeichnen sich dadurch durch eine große Formbeständigkeit aus, was bereits an sich zu einer deutlichen Verbesserung der Tragfähigkeit der erfindungsgemäßen Tragschicht führt. Darüber hinaus sind die ersten Eintiefungen bei der erfindungsgemäßen Ausführung vollständig mit einem druckfesten Schüttgut gefüllt, beispielsweise mit Blähton oder Gummigranulat, dessen Partikel durch die die Eintiefungen umschließenden Wandungen an gegenseitigen Relativverlagerungen gehindert werden und dadurch die Tragfähigkeit weiter erhöhen. Die die erfindungsgemäße Tragschicht oberseitig abdeckende Filtermatte liegt im Bereich der ersten Eintiefungen unmittelbar auf den Partikeln des Schüttguts auf. Diese haben zumindest in ihrer Zusammenfassung innerhalb des Schüttgutes kapilaraktive Wirkungen, wodurch es gelingt, die Filtermatte und zugleich das darauf lastende Erdreich in dem für eine Dachbegrünung erforderlichen Maße zu benetzen. Das hierzu benötigte Wasser läßt sich in den vorhandenen Freiräumen der ersten Eintiefungen bis zur Ebene der unverformten Kunststoffolie aufstauen. Darüber hinausgehende Wassermengen werden über den unverformten Teil der Kunststoffolie den Wasserabflußlöchern zugeführt, über welche sie das System gefahrlos zu verlassen vermögen. Die Filtermatte vermag diesen Teil der Kunststoffolie nicht zu berühren, weil sie einerseits durch das Schüttgut und andererseits durch die Böden der zweiten Eintiefungen in einem Abstand hierzu gehalten wird. Den ebenen Teil der Kunststoffolie überströmendes Wasser vermag dadurch die Filtermatte nicht unmittelbar zu benetzen. Die Gefahr der unzulässig intensiven Durchnässung des auf der Filtermatte auflastenden Erdreiches ist dadurch bei der erfindungsgemäßen Tragschicht vernachlässigbar gering.

Die in Verbindung mit der erfindungsgemäßen Tragschicht zur Anwendung gelangende Filtermatte besteht aus einem zugfesten Flächengebilde, beispielsweise aus einem in sich verfestigten, nichtgewebten oder gewebten Flächengebilde. Dieses ist unverschiebbar an den nach oben weisenden Böden der zweiten Eintiefungen festgelegt und trägt auf diese Weise wesentlich zur Erhöhung der Formbeständigkeit der erfindungsgemäßen Tragschicht bei.

Als Schnittgut eignen sich für hohe statische Belastungen besonders gut mineralische Partikel wie Blähton, Blähschiefer oder Kies. Diese Materialien können jedoch bei dynamischer Belastung zerstörbar sein, weshalb sich für befahrbare Ausführungen die Verwendung nachgiebiger und insbesondere von elastisch nachgiebigen Partikeln empfiehlt, beispielsweise von Partikeln aus Hart- und/oder Weichgummi. Diese können eine klebrige Oberfläche haben, was die Erzielung einer guten Tragfähigkeit und Schwingungsdämpfung begünstigt.

Die ersten Eintiefungen können von kegelförmig nach oben erweitertem Querschnitt sein, was das Einfüllen des druckfesten Schüttgutes erleichtert und ihnen darüber hinaus eine besonders gute Formbeständigkeit verleiht. Diese bezieht sich nicht nur auf den primär angestrebten Zweck, eine Relativverlagerung der das Schüttgut bildenden Partikel bei senkrechten Belastungen zu verhindern, sondern darüber hinaus auch auf die Erzielung einer besonders großen Deformationsbeständigkeit in bezug auf Schubbelastungen.

Eine besonders gute Tragfähigkeit wird erhalten, wenn die Eintiefungen eine Tiefe haben, die 0,5 bis zweimal, zweckmäßig 0,8 bis 1,3 mal so groß ist wie die maximale Weite. Insbesondere im genannten Falle läßt sich eine befriedigende Tragfähigkeit der erfindungsgemäßen Tragschicht bereits unter Verwendung einer sehr dünnen Kunststoffolie aus thermoplastischem Werkstoff erzielen.

Die ersten Eintiefungen haben zweckmäßigerweise eine Tiefe, die wesentlich größer ist als diejenige der zweiten Eintiefungen. Neben einer besonders guten Wasserspeicherkapazität der erfindungsgemäßen Tragschicht wird hierdurch eine gute Hinterlüftung erreicht, was von wesentlicher Bedeutung ist im Hinblick auf die Vermeidung von Fäulnisvorgängen in den offenen Zwischenräumen. Ausführungen, bei denen die ersten Eintiefungen eine Tiefe haben, die etwa 5 bis 15 mal, zweckmäßiger 8 bis 12 mal so groß ist wie diejenige der zweiten Eintiefungen, haben sich als besonders vorteilhaft bewährt.

Die ersten und die zweiten Eintiefungen können jeweils eine Tiefe haben, die mit der jeweils geringsten Breite im wesentlichen übereinstimmt. Hinsichtlich der erforderlichen Formbeständigkeit ist die Einhaltung des Verhältnisses von großer Bedeutung.

Die ersten Eintiefungen und die Wasserabflußlöcher sind bei der erfindungsgemäßen Tragschicht zweckmäßig in Form eines regelmäßigen Musters über die Gesamtfläche der Kunststoffolie verteilt, wobei sowohl die ersten Eintiefungen als auch die Wasserabflußlöcher von zweiten Eintiefungen umgeben sein können. Die zweiten Eintiefungen können bei einer solchen Ausführung einen besonders geringen Querschnitt haben, was es gestattet, die Filtermatte in dichtbenachbarten Abständen nahezu punktförmig abzustützen und auf diese Weise neben einer guten Hinterlüftung einen guten Wasserabfluß zu gewährleisten. Es ist auch möglich, unter den zweiten Eintiefungen solche vorzusehen, die eine trogähnliche Form haben und die gegebenenfalls dem Außenumfang der ersten Eintiefungen angenähert und hinsichtlich ihrer Gestalt angepaßt sind. Zweite Eintiefungen einer entsprechenden Gestalt können die ersten Eintiefungen auch unmittelbar in Form von einen Abstand von einander aufweisenden Segmenten umschließen, was neben einem guten Abfluß überschüssigen Wassers eine gute Festlegung des in den ersten Eintiefungen enthaltenen Schüttgutes gewährleistet.

Nach einer anderen Ausgestaltung ist es vorgesehen, daß zusätzlich zu den zweiten Eintiefungen die ersten Eintiefungen unterseitig an einem zugfesten Flächengebilde festgelegt sind, beispielsweise anfeuchtigkeitsundurchlässigen Kunststoffolie. Neben einer deutlichen Verbesserung der Tragfähigkeit läßt sich hierdurch eine zusätzliche Wasserleitschicht gewinnen und damit zusätzliche Sicherheit gegen das Undichtwerden des mit der erfindungsgemäßen Tragschicht ausgerüsteten Daches.

Falls das Flächengebilde aus einem feuchtig-keitsdurchlässigen Material besteht, besteht dem-gegenüber eine verstellbare Verklebungsmöglich-keit mit Dachbahnen, weil der benötigte Klebstoff leichter in die Poren einzudringen vermag. Materialien mit einer Vielzahl von dichtbenachbarten Poren, beispielsweise aus Vliesstoff oder Geweben, werden deshalb bevorzugt.

Der Gegenstand der Erfindung wird nachfolgend anhand der in der Anlage beigefügten Zeichnung weiter verdeutlicht. Es zeigen:

Fig. 1: Eine beispielhafte Ausführung einer Kunststoffolie in einer Ansicht von oben.

Fig. 2: Die Kunststoffolie nach Fig. 1 in quergeschnittener Darstellung und Zusammenfassung mit den übrigen Elementen einer beispielhaften Ausführung der erfindungsgemäßen Tragschicht.

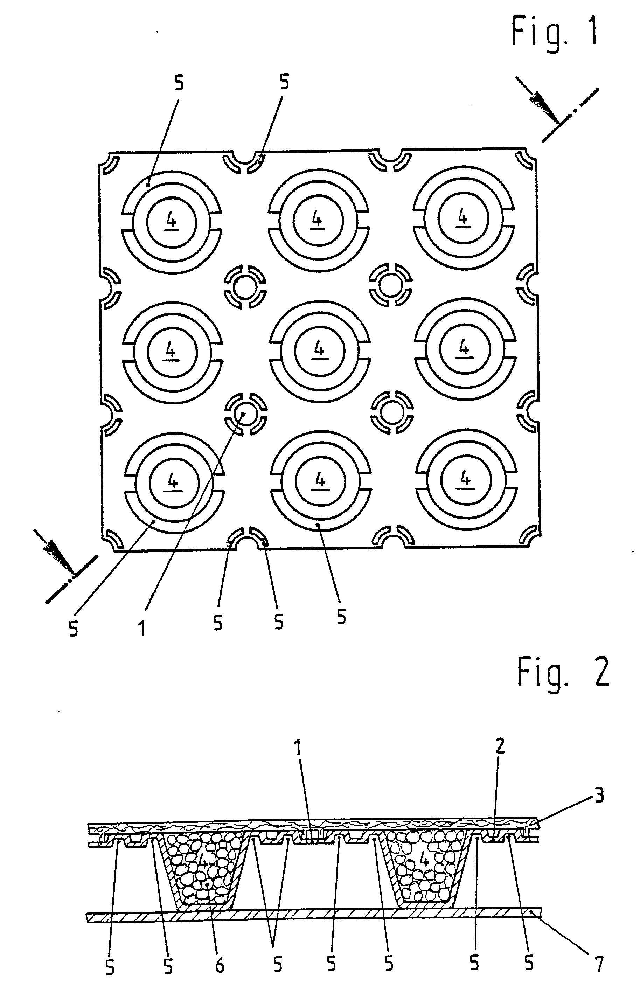

Die in Fig. 1 gezeigte, tiefgezogene Kunststoffolie besteht aus Polyäthylen und hat eine Dicke von etwa 1,5 mm. Sie weist durch Tiefziehen erzeugte erste Eintiefungen 4 auf, die von oben eindringen und die auf einem quadratischen Grundraster gleichmäßig über die gesamte Fläche verteilt sind. Zusätzlich weißt die Kunststoffolie Wasserabflußlöcher 1 auf, welche diagonal zu den ersten Eintiefungen 4 versetzt und ebenfalls auf einem quadratischen Grundraster angeordnet sind. Die Wasserabflußlöcher bestehen aus einfachen Ausstanzungen.

Sowohl die ersten Eintiefungen 4 als auch die Wasserabflußlöcher 1 sind segmentartig von zweiten Eintiefungen 5 umschlossen. Diese sind ebenfalls durch Tiefziehen erzeugt, dringen indessen in die Unterseite der Kunststoffolie 2 ein und bilden auf diese Weise erhaben über den unverformten Teil 8 der Kunststoffolie nach oben vorspringende Segmente. Diese haben in Umfangsrichtung der ersten Eintiefungen 4 bzw. der Wasserabflußlöcher 1 einen Abstand voneinander. Überschüssiges Wasser vermag dadurch den Innenraum der ersten Eintiefungen 4 nach außen zu verlassen und im wesentlichen ungehindert in den Bereich der Wasserabflußlöcher 1 zugelangen. Der hierfür zur Verfügung stehende Durchflußquerschnitt weist in Richtung der Wasserabflußlöcher 1 stets eine zunehmende Erweiterung auf. Die Gefahr des Auftretens von Verstopfungen ist dadurch vernachlässigbar gering. Dennoch ergibt sich eine ausgezeichnete, radialgerichtete Abstützung des in der gebrauchsfertigen Tragschicht in den ersten Eintiefungen 4 enthaltenen Schüttgutes. Dieses besteht aus Partikeln, die an sich eine große Tragfähigkeit haben, beispielsweise aus Blähtonpartikeln. Diese werden bei der erfindungsgemäßen Tragschicht durch die die ersten Eintiefungen 4 umgebenden, kegelstumpfförmig ausgebildeten Folienbestandteile unverrückbar aneinander angedrückt. Selbst bei hoher Belastung ist daher keine Kollabierung der Tragschicht in senkrechter Richtung zu befürchten.

Fig. 2 zeigt die tiefgezogene Kunststoffolie nach Fig. 1 während ihrer bestimmungsgemäßen Verwendung in einer Tragschicht. Dabei ist an den nach oben weisenden Böden der zweiten Eintiefungen eine zugfeste Filtermatte 3 unverrückbar festgelegt, an den nach unten weisenden Böden der ersten Eintiefungen 4 eine zugfeste Kunststoffolie 7. Das insgesamt erhaltene, dreidimensionale Flächengebilde erhält hierdurch sowie durch die Füllung der ersten Eintiefungen 4 mit einem inkompressiblen Schüttgut, beispielsweise mit Blähton, eine ausgezeichnete Tragfähigkeit, was seine Verwendung bei der Dachbegrünung besonders begünstigt. Auch die ausgezeichnete Speicherfähigkeit für Wasser und die gute Hinterlüftung durch die Wasserabflußlöcher 1 wirkt sich dabei in positiver Weise aus. Eine Übernässung des auflastenden Erdreiches ist nicht mehr zu befürchten.

**Ansprüche**

1. Tragschicht für die Dachbegrünung, umfassend eine von Wasserabflußlöchern durchdrungene Kunststoffolie, die oberseitig durch eine Filtermatte abgedeckt ist und von oben eingreifende, durch Tiefziehen gebildete erste Eintiefungen aufweist, die seitlich versetzt sind in bezug auf von unten eingreifende, zweite Eintiefungen, wobei die ersten Eintiefungen vollständig mit einem druckfesten Schüttgut gefüllt sind, dadurch gekennzeichnet, daß die ersten und die zweiten Eintiefungen (4,5) napfartig gestaltet sind, daß die Wasserabflußlöcher (1) in bezug auf die ersten und die zweiten Eintiefungen (4,5) seitlich versetzt angeordnet sind und daß die Filtermatte (3) unverschiebbar an den nach oben weisenden Böden der zweiten Eintiefungen (2) festgelegt ist.

2. Tragschicht nach Anspruch 1, dadurch gekennzeichnet, daß die ersten Eintiefungen (4) einen kegelförmig nach oben erweiterten Querschnitt haben.

3. Tragschicht nach Anspruch 2, dadurch gekennzeichnet, daß die ersten Eintiefungen (4) eine Tiefe H haben, die 0,5 bis zweimal so groß ist wie die maximale Weite D.

4. Tragschicht nach Anspruch 3, dadurch gekennzeichnet, daß die ersten Eintiefungen (4) eine Tiefe H haben, die 0,8 bis 1,3 mal so groß ist wie die maximale Weite D.

5. Tragschicht nach Anspruch 1 bis 4, dadurch gekennzeichnet, daß die ersten Eintiefungen (4) eine Tiefe H haben, die etwa 5 bis 15 mal so groß ist wie die Tiefe T der zweiten Eintiefungen (5).

6. Tragschicht nach Anspruch 5, dadurch gekennzeichnet, daß die ersten Eintiefungen (4) eine Tiefe H haben, die 8 bis 12 mal so groß ist wie die Tiefe T der zweiten Eintiefungen (5).

7. Tragschicht nach Anspruch 1 bis 6, dadurch gekennzeichnet, daß die ersten und die zweiten Eintiefungen (4,5) eine Tiefe H, T haben, die mit der geringsten Breite B,W im wesentlichen übereinstimmt.

8. Tragschicht nach Anspruch 7, dadurch gekennzeichnet, daß die ersten Eintiefungen (4) und die Wasserabflußlöcher (1) regelmäßig wiederkehrend über die Fläche der Kunststoffolie (2) verteilt und von zweiten Eintiefungen (5) umschlossen sind.

9. Tragschicht nach Anspruch 8, dadurch gekennzeichnet, daß die zweiten Eintiefungen (5) eine trogähnliche Form haben.

10. Tragschicht nach Anspruch 9, dadurch gekennzeichnet daß die Form an den Außenumfang der ersten und/oder der zweiten Eintiefungen (4,5) angepasst und/oder angenähert ist.

11. Tragschicht nach Anspruch 9 bis 10, dadurch gekennzeichnet, daß die zweiten Eintiefungen (5) solche Eintiefungen umfassen, die die ersten Eintiefungen (4) ohne Abstand umschließen.

12. Tragschicht nach Anspruch 1 bis 11, dadurch gekennzeichnet, daß die ersten Eintiefungen (4 unterseitig an einem zugfesten Flächengebilde (7) festgelegt sind.

13. Tragschicht nach Anspruch 12, dadurch gekennzeichnet, daß das Flächengebilde (7) aus einer feuchtigkeitsundurchlässigen Kunststoffolie besteht.

14. Tragschicht nach Anspruch 12, dadurch gekennzeichnet, daß das Flächengebilde (7) aus einem feuchtigkeitsundurchlässigen Material besteht.

15. Tragschicht nach Anspruch 1 bis 14, dadurch gekennzeichnet, daß die ersten Eintiefungen (4) mit einem Schnittgut (6) aus Gummipartikeln gefüllt sind.

16. Tragschicht nach Anspruch 15, dadurch gekennzeichnet, daß die Gummipartikel mit einer klebrigen Oberfläche versehen sind.

Fig. 1

Fig. 2